(19) Europäisches Patentamt

European Patent Office

Office européen des brevets

(11) Veröffentlichungsnummer: **0 219 573**
**B1**

(12) **EUROPÄISCHE PATENTSCHRIFT**

(45) Veröffentlichungstag der Patentschrift: **04.04.90**

(21) Anmeldenummer: **85114870.0**

(22) Anmeldetag: **23.11.85**

(51) Int. Cl.⁵: **F 16 J 9/06**

(54) **Kolbenring, insbesondere Ölabstreifring.**

(30) Priorität: **23.08.85 DE 3530175**

(43) Veröffentlichungstag der Anmeldung:
**29.04.87 Patentblatt 87/18**

(45) Bekanntmachung des Hinweises auf die
Patenterteilung:
**04.04.90 Patentblatt 90/14**

(84) Benannte Vertragsstaaten:
**FR GB IT**

(56) Entgegenhaltungen:
**EP-A-0 088 160**
**US-A-3 627 333**

(73) Patentinhaber: **GOETZE AG**
**Bürgermeister-Schmidt-Strasse 17**
**D-5093 Burscheid 1 (DE)**

(72) Erfinder: **Brauers, Bert, Dr. Ing.**
**Füllsichel 19**
**D-5093 Burscheid (DE)**
Erfinder: **Morsbach, Martin, Dr. Ing.**
**Finkenweg 16**
**D-5093 Burscheid (DE)**

Courier Press, Leamington Spa, England.

**Beschreibung**

Die Erfindung betrifft einen Kolbenring, insbesondere einen axial niedrig bauenden Ölabstreifring, bestehend aus einer Spreizfeder, insbesondere aus Bandmaterial, und mindestens einer Lamelle, die zum einen auf mehreren in Umfangsrichtung gesehen radial sich erstreckenden Zungen der Spreizfeder mindestens teilweise aufliegt und zum anderen radial an aus den Zungen etwa axial abgebogenen Schenkeln sich abstützt, die wiederum radial nach innen abgebogene Verlängerungen aufweisen.

Ein dreiteiliges, aus zwei Lamellenringen und einer dazwischen angeordneten Spreizfeder bestehendes, axial niedrig bauendes Kolbenring-System, wie es zum Abstreifen des Öles in Kolbennuten bei Verbrennungsmaschinen eingesetzt wird, ist durch die US—A—36 27 333 bekannt. Die aus einem Metallband bestehende Spreizfeder ist in Umfangsrichtung gesehen mit von beiden Umfangsflächen ausgehenden alternativen Einschnitten versehen. Im Bereich der inneren Umfangsfläche der Spreizfeder sind ebenfalls alternierend etwa axial abgebogene Schenkel vorgesehen, die zur radialen Abstützung jeweils einer Lamelle dienen. Die federnden, radial verlaufenden Zungen bilden Auflageflächen für die beiden Lamellen. Dieses Kolbenring-System weist nicht nur eine niedrige axiale Höhe, sondern darüberhinaus auch eine relativ geringe radiale Wandstärke auf. Durch diese konstruktive Gestaltung der Spreizfeder werden nur sehr kurze Hebelarme und daraus resultierend eine harte Federkennung erreicht. Diese harte Federkennung führt im Betriebszustand zu einem schnellen Abfall der Tangentialkraft des Kolbenringes bei Verschleiß.

Bei den in der DE—C—32 08 396 beschriebenen Kolbenring-Konstruktionen wird durch Einsatz eines radial breiteren Bandmaterials eine weichere Federkennung der Spreizfeder ermöglicht. Konstruktiv sind dazu die axial abgebogenen und radial hinter die Lamellen greifenden Schenkel mit radial nach innen sich erstreckenden Verlängerungen ausgebildet. Neben den gezielt erreichbaren Vorteilen wird zwangsläufig die radiale Wandstärke des Kolbenring-Systems erhöht. Relativ tiefe Kolbennuten führen jedoch zu Festigkeitsproblemen bei der Kolbenauslegung.

In der US—A—28 55 254 ist ein zweiteiliges Kolbenring-System, bestehend aus einem axial relativ hohen Kolbenring und einer sich axial neben und radial hinter den Kolbenring erstreckenden Spreizfeder aus Bandmaterial mit rechteckigem oder rundem Querschnitt, beschrieben. Der sich radial hinter den Kolbenring erstreckende Spreizfeder-Schenkel kann dabei unter einem zur Kolbenringflanke spitzen Winkel verlaufen. Damit wird eine Berührung der Spreizfeder ausschließlich im Bereich der der Spreizfeder zugewandten, inneren Umfangskante des Kolbenringes sichergestellt.

Aufgabe der vorliegenden Erfindung ist es, ein sowohl axial als auch radial niedrig bauendes Kolbenring-System zu schaffen, welches einerseits durch eine besonderes kompakte Bauweise ein geringes Kolbennut-Volumen benötigt und andererseits den Einsatz einer Spreizfeder mit relativ weicher Federkennung ermöglicht. Insbesondere soll durch das Kolbenring-System eine Anpassung an serienweise von den Kolbenherstellern unterschiedlich gefertigte Kolbennuttiefen ermöglicht werden.

Erfindungsgemäß werden bei der eingangs beschriebenen Kolbenringgattung, den jeweiligen serienweise unterschiedlichen Einbauverhältnissen entsprechend, die radial inneren Verlängerungen der Spreizfeder-Schenkel in die der Lamellenseite abgewandte axiale Richtung soweit abgebogen, daß sie sich unter einem definierten spitzen bis rechtwinkligen Winkel zur Kolbenringflanke unter Bildung eines funktionstechnisch bedingten radialen Abstandes zum Kolbennutgrund erstrecken. Die im Grenzfall erreichbare rectwinklige Abbiegung der Schenkel-Verlängerung führt dabei zu einer optimalen radial niedrigen Bauweise des Kolbenring-Systems. Für die Praxis ist eine minimale Abbeigung der Verlängerung unter einem Winkel von 45° notwendig, um eine nennenswerte Verkürzung der radialen Kolbenring-Wandstärke bei weicher Federkennung zu erlangen. Bevorzugt beträgt der Winkel zwischen Schenkel-Verlängerung und Kolbenflanke 60 bis 90°. Insbesondere bei Verwendung von Bandmaterial mit rechteckigem Bandquerschnitt zur Herstellung der Spreizfeder wird empfohlen, die radial inneren Begrenzungskanten, der Verlängerungen abzurunden, um eine optimale Anpassung an die ebenfalls abgerundeten Ecken zwischen Kolbennutflanke und Nutgrund sicherzustellen. Denkbar ist es aber auch, die Verlängerungen effektiv über einen Winkel von mehr als 90° abzubiegen, so daß sich die radial inneren Begrenzungsflächen wieder unter einen spitzen Winkel zur anderen Kolbennutflanke erstrecken. Damit wird ebenfalls eine Berücksichtigung der Kolbennutgrund-Abrundung ohne Benachteiligung des Federungs- und Dichtvermögens des Kolbenringes sichergestellt.

Ausführungsbeispiele der Erfindung sind in der Zeichnung dargestellt und werden wie folgt beschrieben. Es zeigen

Figuren 1 bis 4 Teilschnitte durch Kolben mit vier montierten Kolbenring-Ausführungen

Figuren 5 und 6 Teil-Abwicklungen der Spreizfeder-Bänder

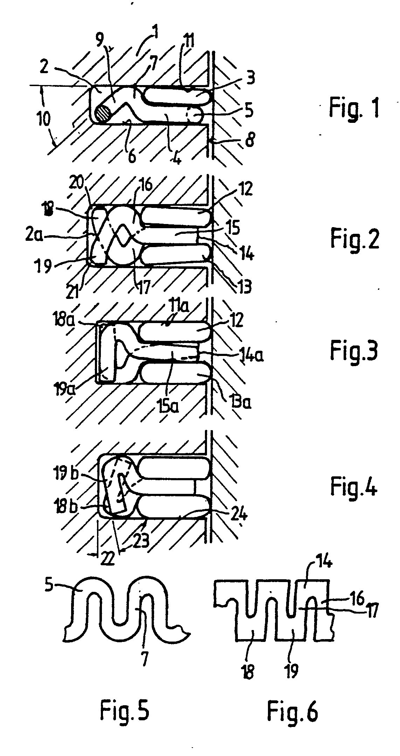

Bei dem in Figur 1 dargestellten Teilschnitt durch einen Kolben 1 ist in der Kolbennut 2 ein zweiteiliger Kolbenring, bestehend aus einer Lamelle (3) und einer Spreizfeder 4 mit radialem Spiel gegenüber dem Kolbennutboden angeordnet. Die Lamelle 3 wird von der aus einem Bandmaterial mit kreisförmigem Querschnitt —siehe auch Figur 5—hergestellten Spreizfeder 4 mittels der federnden Zungen 5 axial gegenüber der unteren Kolbennutwand 6 abgestützt und radial von dem axial abgebogenen Schenkel 7 gegen die Zylinderwand 8 gedrückt. Der Schenkel 7 weist eine Verlängerung 9 auf, die axial in Richtung auf die untere Kolbennutwand 6 unter einem Winkel 10 von 45° gegenüber der Kolbenringflanke—entsprechend der oberen Kolbennutwand 11—verläuft.

Das Ausführungsbeispiel nach Figur 2 zeigt ein dreiteiliges Kolbenring-System, bestehend aus zwei Lamellen 12, 13 und einer Spreizfeder 14 aus Bandmaterial mit rechteckigem Querschnitt—siehe auch Figur 6—, die sich radial mit ihren federnden Zungen 15 zwischen die beiden Lamellen 12, 13 erstreckt. Die hinter die Lamellen axial abgebogenen Schenkelbereiche 16, 17 weisen axial entgegengesetzt abgebogene Verlängerungen 18, 19 auf, die sich etwa unter einem Winkel von 60° leicht bogenförmig nahezu bis in die gegenüberliegenden Nutgrundecken 20, 21 erstrecken. Die radial inneren Enden der Verlängerungen 18, 19 sind entsprechend den Abrundungen 20, 21 der Kolbennut 2a ebenfalls abgerundet, um eine Berührung bei Normallage des Ringsystems in der Kolbennut zu vermeiden.

Beim Ausführungsbeispiel nach Figur 3 sind die Verlängerungen 18a und 19a der Spreizfeder 14a um 90° zur Kolbenringflanke 11a abgebogen, d.h., sie verlaufen parallel zum Kolbennutgrund. Die Zungen 15a der Spreizfeder 14a sind in Umfangsrichtung gesehen alternierend in axialer Richtung verschränkt, so daß sie zusätzlich axial federnd auf die Lamellen 12a, 13a einwirken.

Zur Vermeidung zusätzlicher Abrundungen an den radial inneren Kanten der Spreizfeder-Verlängerungen 18b, 19b sind diese nach Figur 4, soweit umgebogen, daß sie sich unter einem spitzen Winkel 22 vom Nutgrund weg erstreckken; damit bilden sie gleichfalls einen spitzen Winkel 23 zur unteren Kolbenringflanke 24.

In den Figuren 5 und 6 sind teilweise Abwicklungen der Spreizfedern 5 aus Bandmaterial mit rundem Querschnittsprofil (Draht) und 14 (14a beziehungsweise 14b) aus Bandmaterial mit rechteckigem Querschnitt als nicht maßgerechte Prinzipskizzen dargestellt. Die Abwicklungen der Spreizfedern 14 (14a und 14b) entsprechen der Federform vor dem Biegen der Schenkel 7 beziehungsweise 14 und der Verlängerungen 9 beziehungsweise 18, 19 (18a, 19a und 18b, 19b).

## Patentansprüche

1. Kolbenring, insbesondere axial niedrig beauender Ölabstreifring, bestehend aus einer Spreizfeder (4, 14) insbesondere aus Bandmaterial, und mindestens einer Lamelle (3, 12, 13) die zum einen auf mehreren in Umfangsrichtung gesehen radial sich erstreckenden Zungen (5, 15) der Spreizfeder (4, 14) mindestens teilweise aufliegt und zum anderen radial an aus den Zungen (5, 15) etwa axial abgebogenen Schenkeln (7, 16, 17) sich abstützt, die wiederum radial nach innen abgebogene Verlängerungen (9, 18, 19) aufweisen, dadurch gekennzeichnet, daß die Verlängerungen (9, 18, 19) in die der Lamellenseite abgewandte axiale Richtung soweit abgebogen sind, daß sie sich unter einem spitzen bis rechten Winkel (10, 23) zur Kolbenringflanke (11, 11a) erstrecken.

2. Kolbenring nach Anspruch 1, dadurch gekennzeichnet, daß die Verlängerungen (9) unter einem Winkel von mindestens 45° zur Kolbenringflanke (11) verlaufen.

3. Kolbenring nach Anspruch 1, dadurch gekennzeichnet, daß die Verlängerungen (18, 19) unter einem Winkel von 60 bis 90° zur Kolbenringflanke (11a) verlaufen.

4. Kolbenring nach Anspruch 1, dadurch gekennzeichnet, daß die radial inneren Begrenzungskanten der Verlängerungen (18, 19 beziehungsweise 18a, 19a) abgerundet sind.

5. Kolbenring nach Anspruch 1 dadurch gekennzeichnet, daß die Verlängerungen (18b, 19b) soweit abgebogen sind, daß deren Enden unter einem spitzen Winkel (22) vom Kolbennutboden weggerichtet verlaufen (divergieren).

## Revendications

1. Segment de piston, en particulier segment racleur d'huile de faible hauteur axiale, constitué par un ressort (4, 14) à expansion, en particulier en mátériau en ruban, et par au moins une lamelle (3, 12, 13) qui, d'un côté, repose au moins en partie sur plusieurs languettes (5, 15) du ressort à expansion s'étendant, regardées du côté de la périphérie, radialement et qui, d'un autre, s'appuie radialement sur des branches (7, 16, 17) recourbées à peu près axialement dans les languettes (5, 15), qui présentent des prolongements (9, 18, 19) recourbés vers l'intérieure à nouveau radialement, caractérisé en ce que les prolongements (9, 18, 19) sont recourbés dans la direction axiale opposée au côté de la lamelle dans de telles proportions qu'ils s'étendent selon un angle (10, 23) par rapport au flanc (11, 11a) du segment de piston qui va de l'angle aigu à l'angle droit.

2. Segment de piston selon la revendication 1, caractérisé en ce que les prolongements (9) s'étendent selon un angle d'au moins 45° par rapport au flanc (11) du segment de piston.

3. Segment de piston selon la revendication 1, caractérisé en ce que les prolongements (18, 19) s'étendent selon un angle de 60 à 90° par rapport au flanc (11a) du segment de piston.

4. Segment de piston selon la revendication 1, caractérisé en ce que les tranches de bordure radialement intérieures des prolongements (18, 19 respectivement 18a, 19a) sont arondies.

5. Segment de piston selon la revendication 1, caractérisé en ce que les prolongements (18b, 19b) sont recourbés dans le telles proportions que leurs extrémités s'éloignent (divergent) du fond de gorge annulaire du piston selon un angle (22) aigu.

## Claims

1. Piston ring, especially an oil control ring fitted axially below, consisting of a spreading spring (4, 14), especially of strip material, and at least one lamella (3, 12, 13) which bears at least partially for the one part on a plurality of tongues (5, 15) of the spreading spring (4, 14) which, regarded in the circumferential direction, extend radially, and for the other parts abuts radially on legs (7, 16, 17) bent somewhat axially out of the tongues (5, 15), which legs again have radially inwardly bent extensions (9, 18, 19), characterized in that the extensions (9, 18, 19) are bent so far into the axial direction directed away from the lamella side that they extend at an acute to right angle to the piston ring flank (11, 11a).

2. Piston ring according to Claim 1, characterized in that the extensions (9) run at an acute angle of at least 45° to the piston ring flank (11).

3. Piston ring according to Claim 1, characterized in that the extensions (18, 19) run at an angle of 60° to 90° to the piston ring flank (11a).

4. Piston ring according to Claim 1, characterized in that the radially inner bounding edges of the extensions (18, 19 and 18a, 19a respectively) are rounded.

5. Piston ring according to Claim 1, characterized in that the extensions (18b, 19b) are bent so far that their ends run at an acute angle (22) directed away from the piston ring groove bottom (diverge).

Fig. 1

Fig. 2

Fig. 3

Fig. 4

Fig. 5

Fig. 6

1